# FASCICULE DE BREVET EUROPEEN

(11) **EP 1 619 068 B1**
(45) Date de publication et mention de la délivrance du brevet: **08.08.2007**
(21) Numéro de dépôt: 05300575.7
(22) Date de dépôt: 12.07.2005
(51) Int. Cl.: B60K 37/02, B60Q 3/04, G01D 11/28

(54) **Dispositif d'affichage de données**
Anzeigevorrichtung
Display device

(30) Priorité: 23.07.2004 FR 0451634
(43) Date de publication de la demande: 25.01.2006
(73) Titulaire: Peugeot Citroen Automobiles SA, 78943 Vélizy-Villacoublay Cedex (FR)
(72) Inventeur: DESSAILLY, Fabrice, 92370, CHAVILLE (FR); FERON, Stéphane, 92120, MONTROUGE (FR)

(56) Documents cités:
- EP-A- 1 067 502
- DE-A1- 4 227 106
- DE-A1- 10 032 847
- GB-A- 2 266 375
- US-A- 5 121 099

## Description

L'invention se rapporte à un dispositif d'affichage de données, notamment pour tableau de bord de véhicule automobile.

L'invention concerne plus particulièrement un dispositif d'affichage de données comprenant des premiers moyens d'indication disposés dans un premier plan sensiblement perpendiculaire à la direction d'observation du dispositif, des seconds moyens d'indication disposés dans un second plan sensiblement parallèle à la direction d'observation du dispositif, des moyens optiques de projection d'une image des seconds moyens d'indication dans un plan sensiblement perpendiculaire à la direction d'observation du dispositif, de façon à superposer les images respectives des premiers et seconds moyens d'indication.

Un tel dispositif est connu du document GB2266375A dans lequel les premiers moyens d'indication comportent une aiguille et les seconds moyens d'indication comportent un afficheur électronique. Dans ce dispositif, les moyens optiques de projection sont constitués d'une vitre semi-réfléchissante disposée en biais symétriquement entre l'aiguille et l'afficheur électronique, de façon à intercepter tous les signaux lumineux provenant d'une part de l'afficheur électronique et d'autre part du plan de l'aiguille. L'utilisation d'une vitre semi-réfléchissante ne permet pas d'exploiter la lumière ambiante comme source d'éclairage du premier moyen d'indication. Cela nécessite donc que ce moyen émette sa propre lumière.

Un tel dispositif est aussi connu du document DE 100 32 847 A1.

La vitre teintée permet de distinguer les informations relatives à l'aiguille et/ou à l'afficheur électronique uniquement lorsque ces derniers sont illuminés.

Ce type de dispositif connu est donc relativement encombrant et coûteux en raison notamment du nombre de pièces utilisées. Par ailleurs, ce type d'afficheur nécessite des moyens d'éclairage relativement puissants qui rend le système coûteux en terme de composant et de consommation électrique.

Un but de la présente invention est de pallier tout ou partie des inconvénients de l'art antérieur relevés ci-dessus.

A cette fin, le dispositif d'affichage de données selon l'invention, par ailleurs conforme à la définition générique qu'en donne le préambule ci-dessus, est essentiellement caractérisé en ce que, dans un plan sensiblement perpendiculaire à la direction d'observation du dispositif, les moyens optiques de projection occupent une surface sensiblement égale ou inférieure à la surface de l'image projetée des seconds moyens d'indication.

Par ailleurs, l'invention peut comporter l'une ou plusieurs des caractéristiques suivantes :
- selon la direction d'observation du dispositif, les moyens optiques de projection et les premiers moyens d'indication sont au moins en partie superposés,
- les seconds moyens d'indication comportent des moyens lumineux,
- les moyens optiques de projection comportent un organe au moins partiellement réfléchissant,
- les moyens optiques de projection comportent une vitre translucide teintée et/ou fumée associée à l'organe au moins partiellement réfléchissant,
- les premiers moyens d'indication comportent un organe mécanique mobile tel qu'une aiguille,
- les premiers moyens d'indication comportent une aiguille rotative autour d'une extrémité montée sur un axe tournant et en ce que, selon la direction d'observation du dispositif, les moyens optiques de projection sont superposés au moins en partie à l'extrémité (6) de l'aiguille montée sur l'axe,
- l'extrémité de l'aiguille montée sur l'axe a la forme générale d'un cône dont le sommet est orienté sensiblement selon la direction d'observation du dispositif, au moins une partie de la surface du cône étant réfléchissante, de façon à réfléchir l'image des seconds moyens d'indication quelle que soit la position de l'aiguille,
- le dispositif comporte un vitrage, les premiers moyens d'indication étant disposés derrière le vitrage selon la direction d'observation du dispositif, et en ce que le vitrage est incliné vers le bas du dispositif selon cette même direction d'observation.

D'autres particularités et avantages apparaîtront à la lecture de la description ci-après, faite en référence aux figures dans lesquelles :
- la figure 1 représente une vue schématique en coupe et de côté d'un dispositif d'affichage selon un premier exemple de réalisation de l'invention,
- la figure 2 représente une vue schématique en coupe et de côté d'un dispositif d'affichage selon un second exemple de réalisation de l'invention.

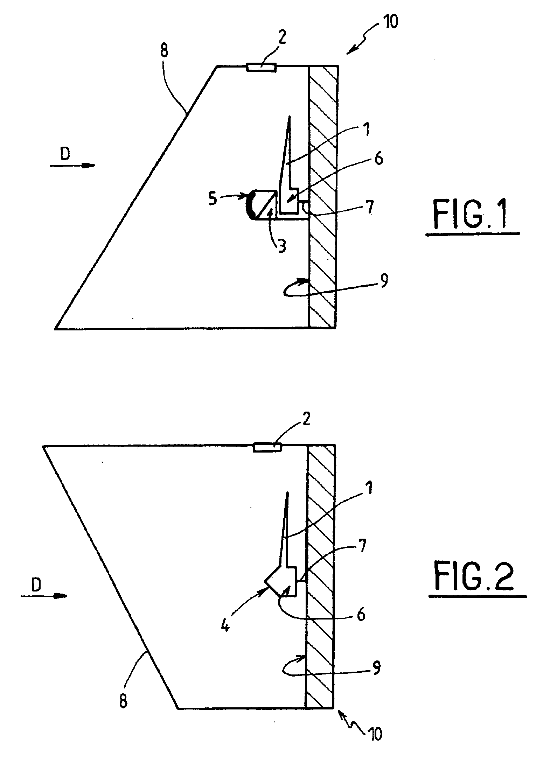

Le dispositif d'affichage selon l'exemple de réalisation de la figure 1 comprend classiquement un boîtier 10 dans lequel est disposée une aiguille 1 rotative dans un plan sensiblement perpendiculaire à la direction D d'observation du dispositif par un utilisateur. Plus précisément, une extrémité 6 de l'aiguille 1 est montée pivotante sur un axe 7 tournant.

Une paroi 9 portant des graduations peut être placée derrière l'aiguille 1, dans un plan perpendiculaire à l'axe tournant 6 de l'aiguille 1. A l'avant de l'aiguille 1, une vitre 8 translucide referme le boîtier. Par exemple, la vitre 8 est inclinée vers le bas en direction de l'observateur.

Des moyens 2 d'indication tels qu'un écran lumineux est disposé dans la partie supérieure du boîtier, dans plan sensiblement parallèle à la direction D d'observation du dispositif.

Une lame 3 semi-réfléchissante est disposée devant l'aiguille 1 et occupe, dans un plan sensiblement perpendiculaire à la direction D d'observation du dispositif, une surface sensiblement égale ou inférieure à la surface de l'image projetée par l'écran lumineux 2. La lame semi-réfléchissante 3 assure une projection de l'image de l'écran 2 dans un plan sensiblement perpendiculaire à la direction D d'observation du dispositif, et superpose ainsi les images respectives de l'aiguille (des graduations de la paroi 9) et de l'image de l'écran 2.

De préférence, et comme représenté, la lame 3 semi-réfléchissante est disposée devant l'extrémité de l'aiguille montée sur l'axe 7 tournant et occulte cette extrémité 6 selon la direction D d'observation du dispositif. La lame 3 semi-réfléchissante créé pour un observateur une image virtuelle de l'écran 2 lumineux sur l'extrémité 6 de l'aiguille 7. Cette image virtuelle est générée dans un plan différent de celui de l'aiguille 1 et créé de ce fait un effet de profondeur par rapport à l'aiguille 1 et à la paroi 9.

Une vitre 5 fumée peut être disposée à l'avant de la lame-3 semi-réfléchissante. La vitre fumée 1 peut occuper, dans un plan sensiblement perpendiculaire à la direction D d'observation du dispositif, une surface sensiblement égale à la surface de la lame 3.

La figure 2 illustre un autre exemple de réalisation de l'invention. Par soucis de concision, les éléments identiques à ceux décrits ci-dessus sont désignés par les même références numériques et ne sont pas décrits en détail une seconde fois.

Le dispositif illustré à la figure 2 se distingue de celui décrit précédemment essentiellement par le fait que la lame semi-réfléchissante et la vitre 5 fumée associée ont été remplacés par des moyens optiques de projections formés directement sur l'aiguille 1. Plus précisément, l'extrémité 6 de l'aiguille 1 montée sur l'axe 7 a la forme générale d'un cône 4 dont le sommet est orienté sensiblement selon la direction D. Par ailleurs, au moins une partie de la surface du cône 4 est réfléchissante (par exemple par traitement ou dépôt d'une matière réfléchissante), de façon à réfléchir l'image de l'écran 2 lumineux quelle que soit la position de l'aiguille 1.

Par ailleurs, dans le dispositif selon la figure 2, la vitre 8 translucide qui referme le boîtier est inclinée vers le haut en direction de l'observateur.

Bien entendu, l'invention n'est pas limitée aux exemples de réalisation ci-dessus. De plus, les caractéristiques du premier exemple de réalisation (figure 1) peuvent être appliquées au second exemple de réalisation (figure 2) et inversement. Par exemple, la vitre 8 translucide qui referme le boîtier de la réalisation de la figure 1 peut également être inclinée vers le haut en direction de l'observateur (cette orientation avantageuse de la vitre 8, moins susceptible de prendre la poussière, n'est pas possible pour la vitre semi-réfléchissante des dispositifs de l'art antérieur car le second moyen d'affichage est placé dans la partie supérieure du système.

On conçoit donc que l'invention a une structure simple et peu coûteuse. L'invention permet notamment de s'affranchir de la nécessiter de prévoir une vitre teintée comme dans l'art antérieur.

## Revendications

1. Dispositif d'affichage de données, notamment pour tableau de bord de véhicule automobile, comprenant des premiers moyens (1) d'indication disposés dans un premier plan sensiblement perpendiculaire à la direction (D) d'observation du dispositif, des seconds moyens (2) d'indication disposés dans un second plan sensiblement parallèle à la direction (D) d'observation du dispositif, des moyens (3, 4, 5) optiques de projection d'une image des seconds moyens (2) d'indication dans un plan sensiblement perpendiculaire à la direction (D) d'observation du dispositif, de façon à superposer les images respectives des premiers et seconds moyens (1, 2) d'indication, **caractérisé en ce que**, dans un plan sensiblement perpendiculaire à la direction (D) d'observation du dispositif, les moyens (3, 4, 5) optiques de projection occupent une surface sensiblement égale ou inférieure à la surface de l'image projetée des seconds moyens (2) d'indication.

2. Dispositif selon la revendication 1, **caractérisé en ce que** selon la direction (D) d'observation du dispositif, les moyens (3, 4, 5) optiques de projection et les premiers moyens (1) d'indication sont au moins en partie superposés.

3. Dispositif selon la revendication 1 ou 2, **caractérisé en ce que** les seconds moyens (2) d'indication comportent des moyens lumineux.

4. Dispositif selon l'une quelconque des revendications précédentes, **caractérisé en ce que** les moyens optiques de projection comportent un organe (3, 4) au moins partiellement réfléchissant.

5. Dispositif selon la revendication 4, **caractérisé en ce que** les moyens optiques de projection comportent une vitre (5) translucide teintée et/ou fumée associée à l'organe (3, 4) au moins partiellement réfléchissant.

6. Dispositif selon l'une quelconque des revendications précédentes, **caractérisé en ce que** les premiers moyens d'indication comportent un organe (1) mécanique mobile tel qu'une aiguille.

7. Dispositif selon la revendication 6, **caractérisé en ce que** les premiers moyens d'indication comportent une aiguille (1) rotative autour d'une extrémité (6) montée sur un axe (7) tournant et **en ce que**, selon la direction (D) d'observation du dispositif, les moyens (3, 4, 5) optiques de projection sont superposés au moins en partie à l'extrémité (6) de l'aiguille montée sur l'axe (7).

8. Dispositif selon la revendication 7, **caractérisé en ce que** l'extrémité (6) de l'aiguille (1) montée sur l'axe (7) a la forme générale d'un cône (4) dont le sommet est orienté sensiblement selon la direction (D) d'observation du dispositif, et **en ce qu'**au moins une partie de la surface du cône (4) est réfléchissante, de façon à réfléchir l'image des seconds moyens (2) d'indication quelle que soit la position de l'aiguille (1).

9. Dispositif selon l'une quelconque des revendications précédentes, **caractérisé en ce qu**'il comporte un vitrage (8), les premiers moyens (1) d'indication étant disposés derrière le vitrage (8) selon la direction (D) d'observation du dispositif, et en ce que le vitrage est incliné vers le bas du dispositif selon cette même direction (D) d'observation.

## Claims

1. Data display device, particularly for a motor vehicle dashboard, comprising first indication means (1) positioned in a first plane substantially perpendicular to the direction (D) of observation of the device, second indication means (2) positioned in a second plane substantially parallel to the direction (D) of observation of the device, optical means (3, 4, 5) for projecting an image from the second indication means (2) in a plane substantially perpendicular to the direction (D) of observation of the device, in order to superimpose the respective images from the first and second indication means (1, 2), **characterised in that**, in a plane substantially perpendicular to the direction (D) of observation of the device, the optical projection means (3, 4, 5) occupy a surface area substantially equal to or less than the surface area of the image projected from the second indication means (2).

2. Device according to Claim 1, **characterised in that**, in the direction (D) of observation of the device, the optical projection means (3, 4, 5) and the first indication means (1) are at least partly superimposed.

3. Device according to Claim 1 or 2, **characterised in that** the second indication means (2) comprise illuminated means.

4. Device according to any one of the preceding claims, **characterised in that** the optical projection means comprise a member (3, 4) that is at least partly reflective.

5. Device according to Claim 4, **characterised in that** the optical projection means comprise a tinted and/or smoked translucent pane (5) associated with the at least partly reflective member (3, 4).

6. Device according to any one of the preceding claims, **characterised in that** the first indication means comprise a mobile mechanical member (1) such as a needle.

7. Device according to Claim 6, **characterised in that** the first indication means comprise a needle (1) rotatable about an end (6) mounted on a revolving axis (7) and **in that**, in the direction (D) of observation of the device, the optical projection means (3, 4, 5) are superimposed at least partly at the end (6) of the needle mounted on the axis (7).

8. Device according to Claim 7, **characterised in that** the end (6) of the needle (1) mounted on the axis (7) is generally shaped like a cone (4), the tip of which is orientated substantially in the direction (D) of observation of the device, and **in that** at least part of the surface area of the cone (4) is reflective, so as to reflect the image of the second indication means (2) whatever the position of the needle (1).

9. Device according to any one of the preceding claims, **characterised in that** it comprises glazing (8), the first indication means (1) being positioned behind the glazing (8) in the direction (D) of observation of the device, and **in that** the glazing is tilted towards the bottom of the device in this same direction (D) of observation.

## Patentansprüche

1. Vorrichtung zum Anzeigen von Daten, insbesondere für das Instrumentenbrett eines Kraftfahrzeugs, mit ersten Anzeigemitteln (1), die in einer ersten Ebene angeordnet sind, welche im Wesentlichen senkrecht zur Blickrichtung (D) auf die Vorrichtung ist, mit zweiten Anzeigemitteln (2), die in einer zweiten Ebene angeordnet sind, welche im Wesentlichen parallel zur Blickrichtung (D) auf die Vorrichtung ist, mit optischen Mitteln (3, 4, 5) zur Projektion eines Bildes der zweiten Anzeigemittel (2) in einer Ebene, die im Wesentlichen senkrecht zur Blickrichtung (D) auf die Vorrichtung ist, sodass die jeweiligen Bilder der ersten und zweiten Anzeigemittel (1, 2) überlagert werden, **dadurch gekennzeichnet, dass** die optischen Projektionsmittel (3, 4, 5) in einer Ebene, die im Wesentlichen senkrecht zur Blickrichtung (D) auf die Vorrichtung verläuft, eine Fläche einnehmen, welche im Wesentlichen gleich oder kleiner ist als die Fläche des von den zweiten Anzeigemitteln (2) projizierten Bildes.

2. Vorrichtung nach Anspruch 1, **dadurch gekennzeichnet, dass** die optischen Projektionsmittel (3, 4, 5) und die ersten Anzeigemittel (1) in der Blickrichtung (D) auf die Vorrichtung wenigstens teilweise übereinander liegen.

3. Vorrichtung nach Anspruch 1 oder 2, **dadurch gekennzeichnet, dass** die zweiten Anzeigemittel (2) Leuchtmittel umfassen.

4. Vorrichtung nach einem der vorhergehenden Ansprüche, **dadurch gekennzeichnet, dass** die optischen Projektionsmittel ein zumindest teilweise reflektierendes Organ (3, 4) aufweisen.

5. Vorrichtung nach Anspruch 4, **dadurch gekennzeichnet, dass** die optischen Projektionsmittel eine durchscheinende getönte Scheibe und/oder eine durchscheinende Rauchglasscheibe (5) aufweisen, die zu dem wenigstens teilweise reflektierenden Organ (3, 4) gehört.

6. Vorrichtung nach einem der vorhergehenden Ansprüche, **dadurch gekennzeichnet, dass** die ersten Anzeigemittel ein bewegliches mechanisches Organ (1) wie beispielsweise eine Nadel umfassen.

7. Vorrichtung nach Anspruch 6, **dadurch gekennzeichnet, dass** die ersten Anzeigemittel eine Nadel (1) umfassen, die um ein an einer Drehachse (7) montiertes Ende (6) drehbar ist, und dass die optischen Projektionsmittel (3, 4, 5) in der Blickrichtung (D) auf die Vorrichtung zumindest teilweise am Ende (6) der an der Achse (7) montierten Nadel übereinander liegen.

8. Vorrichtung nach Anspruch 7, **dadurch gekennzeichnet, dass** das an der Achse (7) montierte Ende (6) der Nadel (1) die allgemeine Form eines Kegels (4) besitzt, dessen Spitze im Wesentlichen in der Blickrichtung (D) auf die Vorrichtung ausgerichtet ist, und dass zumindest ein Teil der Fläche des Kegels (4) reflektierend ist, sodass das Bild der zweiten Anzeigemittel unabhängig von der Position der Nadel (1) reflektiert wird.

9. Vorrichtung nach einem der vorhergehenden Ansprüche, **dadurch gekennzeichnet, dass** sie eine Verglasung (8) aufweist, wobei die ersten Anzeigemittel (1) in der Blickrichtung (D) auf die Vorrichtung hinter der Verglasung (8) angeordnet sind, und dass die Verglasung in dieser Blickrichtung (D) zur Unterseite der Vorrichtung geneigt ist.
